# EUROPEAN PATENT SPECIFICATION

(11) **EP 1 052 133 B1**
(45) Date of publication and mention of the grant of the patent: **20.09.2006**
(21) Application number: 00830342.2
(22) Date of filing: 10.05.2000
(51) Int. Cl.: B60K 35/00, B60K 37/02, G02B 26/02, G02B 26/08

(54) **Instrument panel for motor-vehicles having an auxiliary display system which can be activated by electrostatic petals.**
Armaturentafel für Kraftfahrzeuge mit Hilfsanzeigesystem, das durch elektrostatische Blenden aktiviert werden kann
Tableau de bord pour automobiles avec système d'affichage auxiliaire qui peut être activé par diaphragme électrostatique

(30) Priority: 14.05.1999 IT TO990404
(43) Date of publication of application: 15.11.2000
(73) Proprietor: C.R.F. Società Consortile per Azioni, 10043 Orbassano (Torino) (IT)
(72) Inventor: Pizzi, Marco, 10043 Orbassano (Torino) (IT); Perlo,Piero, 10043 Orbassano (Torino) (IT)
(74) Representative: Notaro, Giancarlo

(56) References cited:
- EP-A- 0 813 078
- DE-A1- 4 323 082
- FR-A- 2 731 957

## Description

The present invention relates to instrument panels for motor-vehicles, of the type comprising a support carrying at least one indicator instrument and a transparent screen placed in front of the support, as disclosed in DE-A-43 23 082.

The purpose of the present invention is to provide an instrument panel of the type specified above that is able to display a high number of items of information in a relatively reduced space and that at the same time presents a simple and inexpensive structure.

With the aim of achieving the above purpose, the subject of the present invention is an instrument panel of the type specified above, characterized in that
associated to said transparent screen is at least one lamina or "petal" in the form of an electrically conductive thin film which is connected at one end to the transparent screen and co-operates with an electrode in the form of a layer of transparent material applied on the transparent screen, said petal being displaceable by electrostatic effect from a curved or curled-up condition of rest, in which the indicator instrument is visible through said transparent screen, to an operating condition, in which said petal hides said indicator instrument from view, following upon application of an electric voltage between said petal and said electrode,
said instrument panel comprising an auxiliary display set on the opposite side of the transparent screen with respect to the indicator instrument and facing said transparent screen, and
said petal having a reflecting surface, whereby, in its operating position, it hides the indicator instrument from view but reflects instead the image of the auxiliary display in the direction of the driver.

Thanks to the above characteristics, the instrument panel according to the invention is able to supply the driver with a great deal of information, notwithstanding the fact that it occupies a relatively small space. The technology usable for making the electrostatic petal is similar to the one that has been employed for some time now in low-power small-sized electrostatic motors suitable for use as actuators in microelectronic-technology applications, for operating mechanical devices and the like in conditions where vibrations occur, such as in the automobile field. Said electrostatic actuators use flexible laminas, also referred to as "lashes", or "petals", that are electrically conductive and each of which has one end associated to a stator and the opposite end adjacent to a translator. The application of voltage pulses between the petals and an electrode associated to the translator causes adhesion by the electrostatic effect of the petals to the translator, with consequent movement of the latter with respect to the stator.

An actuator of the type specified above is , for example, described in Dyatlov V.L., Konyaskin V.V., Potapov B.S., and Pyankov Y.A., "Prospects of the Employment of Synchrotron Radiation in Film Electrostatic Actuator Technology", Nuclear Instruments and Methods in Physics Research, A359 (1995), Pages 394-395.

The instrument panel according to the invention exploits to advantage the technology described above in order to be able to supply the driver with a great deal of information without involving the use of a cumbersome structure.

In one first embodiment of the invention, a single electrostatic petal is envisaged which is designed to cover the transparent screen entirely in its operating condition and to roll up on one side of the screen in its resting condition. In one second embodiment, associated to the transparent screen is a matrix of petals in the form of micro-mirrors, each of which has one end connected to the screen and the opposite end free, the latter free end being set at a distance from the instrument panel in a resting, i.e., curled-up, condition of the corresponding petal.

Further characteristics and advantages of the invention will emerge from the ensuing description referring to the annexed drawings, which are provided merely as non-limiting examples, and in which:
Figures 1 and 2 are sectional views of one first embodiment of the instrument panel according to the invention in two different operating conditions, and
Figures 3 and 4 illustrate one second embodiment of the panel according to the invention in two different operating conditions.

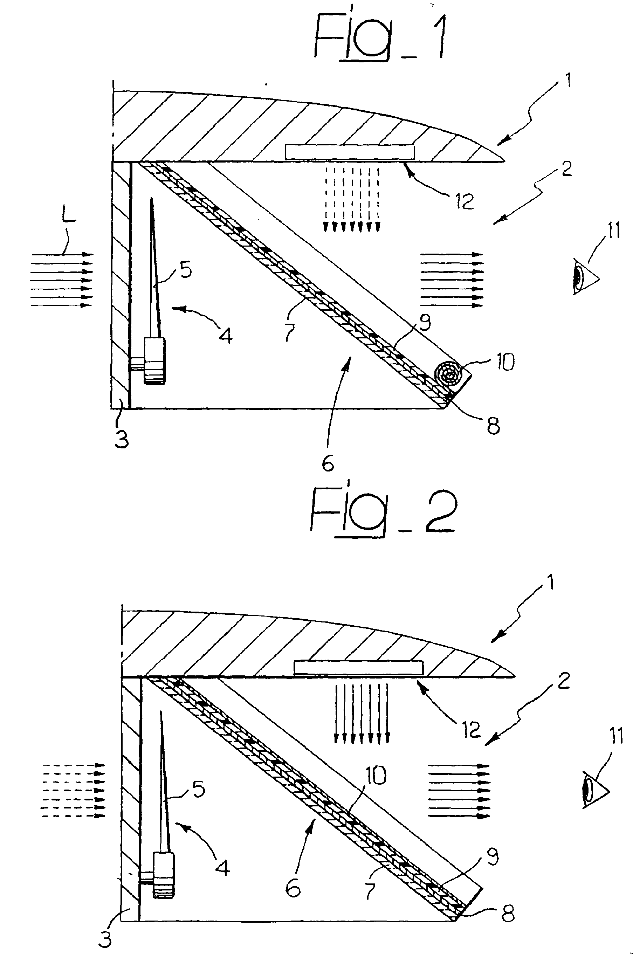

With reference to Figure 1, number 1 indicates, as a whole, the dashboard of a motor vehicle, including an instrument panel 2 which comprises a fixed support 3 that carries at least one indicator instrument 4 including a pointer 5 co-operating with a graduated scale appearing on a surface of the support 3. The fixed structure of the instrument panel 2 further supports a transparent screen 6 set inclined, as illustrated in the drawings, in front of the indicator instrument 4.

The transparent screen 6 includes a lamina 7 made of glass or transparent plastic and having a thickness of a few millimetres or centimetres. A layer 8 of light-transparent conducting material (for example indium tin oxide - ITO) having a thickness of a few tens or hundreds of nanometres is formed on the surface of the lamina 7 by evaporation or spin-coating or silk-screen printing or dipping. The layer 8 is designed to form an electrode. Subsequently, the electrode 8 is insulated with a layer 9 of light-transparent dielectric or ferro-electric insulating material, the thickness of which may range between 0.1 µm to a few tens of microns. This layer may be obtained by silk-screen printing or spin-coating or dipping.

The reference number 10 designates a metallic film having a thickness of a few fractions of a micron constituting the petal. The petal 10 is fixed at one end to the surface of the substrate 6. A metallic film is used that has a certain radius of curvature in such a way that, if no electric voltage is applied, the film remains curled up as shown in Figure 1, on one side of the transparent screen 6, so that the indicator instrument 4 is visible to the eye 11 of the driver through the screen 7, possibly with the aid of a luminous flux L coming from the area behind the supporting wall 3.

When an electric voltage is applied between the petal 10 and the electrode 8, the film 10 spreads out by the electrostatic effect on the surface of the substrate, thus hiding the indicator instrument 4 from the driver's sight (see Figure 2).

According to an important characteristic of the invention, the external surface of the film 10 is reflective, so as to work as a mirror. In the operating, i.e., distended, condition illustrated in Figure 2, the film 10 is therefore able to reflect towards the driver's eye 11 the image of an auxiliary display 12 which is located on the opposite side of the transparent screen 6 with respect to the indicator instrument 4 and which is set facing the screen. In the example illustrated, the auxiliary display 12 is set horizontally above the transparent screen 7, which reflects the image of the auxiliary display 12 towards the driver's eyes. The auxiliary display 12 may be made in any known way and employing any technology.

Thanks to the arrangement described above, the driver is in a position to switch the instrument panel from the condition illustrated in Figure 1 to the condition illustrated in Figure 2, so as to have available further information that may be drawn from the auxiliary display 12, without thereby the instrument panel 2 involving additional encumbrance in the dashboard of the motor vehicle.

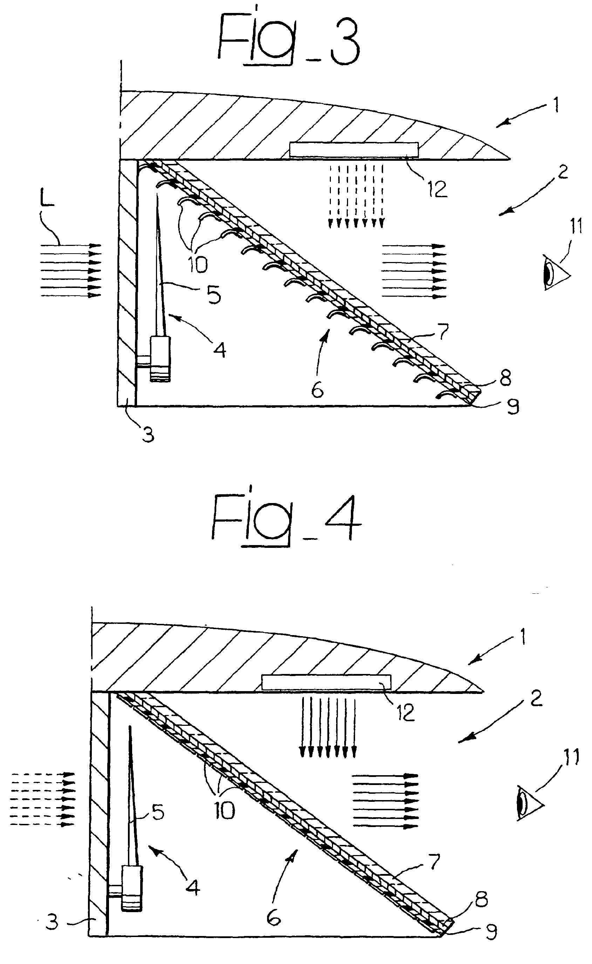

Figures 3 and 4 illustrate the two corresponding operating conditions of a variant of the panel according to the invention, which differs from the embodiment described above only in the respect that, instead of being provided with a single electrostatic petal 10, it comprises a matrix of petals in the form of micro-mirrors. In the example illustrated in Figures 3 and 4, moreover, the petals, again designated by the reference number 10, are set on the internal face of the transparent screen 6. Each petal 10 presents a resting, i.e., curled-up, condition with one end connected to the substrate and one free end set at a distance from the substrate, so as to allow the indicator instrument 4 to be seen. In the operating condition resulting from application of an electric voltage between the petals 10 of the electrode 8, all the petals of the matrix adhere to the substrate, so as to hide the indicator instrument 4 and reflect the image of the auxiliary display 12. In this case, the reflecting surface of each petal 10 is the internal one, i.e., the one facing the transparent screen 6.

## Claims

1. An instrument panel for motor vehicles, comprising a support (3) carrying at least one indicator instrument (4), and a transparent screen (6) placed in front of the support (3), and an auxiliary display (12) placed on the opposite side of the transparent screen (6) with respect to the indicator instrument (4) and facing said transparent screen (6),
**characterized in that**:
associated to said transparent screen (6) is at least one petal (10) in the form of an electrically conductive thin film which is connected at one end to the transparent screen (6) and co-operates with an electrode (8) in the form of a layer of transparent metallic material applied on the transparent screen (6), said petal being displaceable by electrostatic effect from a curved or curled-up condition of rest, in which the indicator instrument (4) is visible through said transparent screen, to an operating condition, in which said petal (10) hides said indicator instrument (4) from view, following upon application of an electric voltage between said petal (10) and said electrode (8),
said petal (10) having a reflecting surface, whereby, in its operating position, it hides the indicator instrument (4) from view but reflects instead the image of the auxiliary display (12) in the direction of the driver.

2. An instrument panel according to Claim 1, **characterized in that** it is provided with a single petal (10) designed to cover the transparent screen (6) entirely in its operating condition and to roll up on one side of the screen (6) in its resting condition.

3. An instrument panel according to Claim 1, **characterized in that** associated to said transparent screen (6) is a matrix of electrostatic petals (10) in the form of micro-mirrors, each of which has one end connected to the screen (6) and the opposite end free, said free end being set at a distance from the transparent screen (6) in the resting condition of the corresponding petal.

4. An instrument panel according to Claim 1, **characterized in that** the transparent screen (6) comprises a transparent glass or plastic lamina and **in that** said electrode (8) consists of a layer of light-transparent conductive material applied by evaporation, or spin-coating, or silk-screen printing, or dipping.

5. An instrument panel according to Claim 1, **characterized in that** the aforesaid electrode (8) is covered by a transparent dielectric or ferro-electric insulating layer (9).

## Patentansprüche

1. Armaturentafel für Kraftfahrzeuge, umfassend einen Träger (3), der mindestens ein Indikatorinstrument (4) trägt, und einen transparenten Schirm (6), vor dem Träger (3) plaziert, und ein Hilfsdisplay (12), bezüglich des Indikatorinstruments (4) auf der gegenüberliegenden Seite des transparenten Schirms (6) plaziert und dem transparenten Schirm (6) zugewandt,
**dadurch gekennzeichnet, daß**:
mit dem transparenten Schirm (6) mindestens eine Lamelle (10) in Form eines stromleitenden Dünnfilms assoziiert ist, der an einem Ende mit dem transparenten Schirm (6) verbunden ist und mit einer Elektrode (8) in Form einer auf dem transparenten Schirm (6) aufgebrachten Schicht aus transparentem metallischem Material zusammenwirkt, wobei die Lamelle durch elektrostatischen Effekt aus einem gekrümmten oder aufgerollten Ruhezustand, in dem das Indikatorinstrument (4) durch den transparenten Schirm sichtbar ist, in einen Arbeitszustand, in dem die Lamelle (10) das Indikatorinstrument (4) der Betrachtung entzieht, bewegt werden kann, nach dem Anlegen einer elektrischen Spannung zwischen der Lamelle (10) und der Elektrode (8),
wobei die Lamelle (10) eine reflektierende Oberfläche aufweist, wodurch sie in ihrer Arbeitsposition das Indikatorinstrument (4) dem Blick entzieht, aber stattdessen das Bild des Hilfsdisplays (12) in Richtung des Fahrers reflektiert.

2. Armaturentafel nach Anspruch 1, **dadurch gekennzeichnet, daß** sie mit einer einzelnen Lamelle (10) versehen ist, die dafür ausgelegt ist, den transparenten Schirm (6) in ihrem Arbeitszustand ganz zu bedecken und sich in ihrem Ruhezustand auf einer Seite des Schirms (6) aufzurollen.

3. Armaturentafel nach Anspruch 1, **dadurch gekennzeichnet, daß** mit dem transparenten Schirm (6) eine Matrix aus elektrostatischen Lamellen (10) in Form von Mikrospiegeln assoziiert ist, von denen jeder ein mit dem Schirm (6) verbundenes Ende aufweist und das gegenüberliegende Ende frei ist, wobei das freie Ende in einer Entfernung von dem transparenten Schirm (6) in dem Ruhezustand der entsprechenden Lamelle angeordnet ist.

4. Armaturentafel nach Anspruch 1, **dadurch gekennzeichnet, daß** der transparente Schirm (6) ein transparentes Glas- oder Kunststoffplättchen umfaßt und daß die Elektrode (8) aus einer durch Aufdampfen oder Aufschleudern oder Siebdruck oder Tauchen aufgebrachten Schicht aus für Licht transparentem leitendem Material besteht.

5. Armaturentafel nach Anspruch 1, **dadurch gekennzeichnet, daß** die oben erwähnte Elektrode (8) von einer transparenten dielektrischen oder ferroelektrischen isolierenden Schicht (9) bedeckt ist.

## Revendications

1. Panneau d'instrument pour automobiles, comprenant un support (3) portant au moins un instrument indicateur (4), et un écran transparent (6) disposé devant le support (3), et un affichage auxiliaire (12) disposé sur le côté opposé de l'écran transparent (6) par rapport à l'instrument indicateur (4) et tourné vers ledit écran transparent (6),
**caractérisé en ce que** :
associé audit écran transparent (6) se trouve au moins un diaphragme (10) sous la forme d'un film mince électriquement conducteur connecté à une extrémité à l'écran transparent (6) et coopérant avec une électrode (8) sous la forme d'une couche de matériau métallique transparent appliquée sur l'écran transparent (6), ledit diaphragme étant déplaçable par effet électrostatique d'une condition de repos courbée ou enroulée, dans laquelle l'instrument indicateur (4) est visible à travers ledit écran transparent, dans un état de fonctionnement, dans lequel ledit diaphragme (10) cache ledit instrument indicateur (4), après application d'une tension électrique entre ledit diaphragme (10) et ladite électrode (8),
ledit diaphragme (10) présentant une surface réfléchissante, de telle sorte que dans position de fonctionnement, il cache l'instrument indicateur (4) mais réfléchit à la place l'image de l'affichage auxiliaire (12) en direction du conducteur.

2. Panneau d'instrument selon la revendication 1, **caractérisé en ce qu'**il est équipé d'un seul diaphragme (10) conçu pour recouvrir l'écran transparent (6) entièrement dans son état de fonctionnement et pour s'enrouler sur un côté de l'écran (6) dans son état de repos.

3. Panneau d'instrument selon la revendication 1, **caractérisé en ce qu'**associée audit écran transparent (6) se trouve une matrice de diaphragmes électrostatiques (10) sous la forme de micro-miroirs, dont chacun possède une extrémité connectée à l'écran (6) et l'extrémité opposée libre, ladite extrémité libre étant disposée à distance de l'écran transparent (6) dans la position de repos du diaphragme correspondant.

4. Panneau d'instrument selon la revendication 1, **caractérisé en ce que** l'écran transparent (6) comprend une lamelle de verre ou de matière plastique transparente et **en ce que** ladite électrode (8) consiste en une couche de matériau conducteur transparent à la lumière appliqué par évaporation, revêtement par centrifugation, sérigraphie ou immersion.

5. Panneau d'instrument selon la revendication 1, **caractérisé en ce que** l'électrode précitée (8) est recouverte d'une couche isolante diélectrique ou ferroélectrique transparente (9).
